# EUROPÄISCHE PATENTSCHRIFT

(11) **EP 2 389 529 B1**
(45) Veröffentlichungstag und Bekanntmachung des Hinweises auf die Patenterteilung: **30.03.2016**
(21) Anmeldenummer: 09810768.3
(22) Anmeldetag: 16.12.2009
(51) Int. Cl.: F16K 99/00, B01L 3/00

(54) **VENTIL, INSBESONDERE FÜR EIN BAUELEMENT DER MIKROFLUIDTECHNIK**
VALVE, IN PARTICULAR FOR A COMPONENT IN MICROFLUID TECHNOLOGY
SOUPAPE, EN PARTICULIER POUR UN COMPOSANT DE LA TECHNIQUE DES MICROFLUIDES

(30) Priorität: 21.01.2009 DE 102009005874
(43) Veröffentlichungstag der Anmeldung: 30.11.2011
(73) Patentinhaber: thinXXS Microtechnology AG, 66482 Zweibrücken (DE)
(72) Erfinder: WEBER, Lutz, 66424 Homburg (DE)
(74) Vertreter: Bernhardt, Reinhold
(86) Internationale Anmeldenummer: PCT/DE2009/001795
(87) Internationale Veröffentlichungsnummer: WO 2010/083795

(56) Entgegenhaltungen:
- WO-A1-2006/056236
- DE-A1- 10 227 593
- US-A- 5 725 017
- US-B2- 6 748 975

## Beschreibung

Die Erfindung betrifft ein Ventil, insbesondere für ein Bauelement der Mikrofluidtechnik, mit Flächen zur gegenseitigen Anlage aufweisenden, unter Versatz der aneinander anliegenden Flächen gegeneinander bewegbaren Ventilkörpern, wobei in einer der Anlageflächen Kanäle für den Zu- und Abfluss eines Fluids ausmünden und in der anderen Anlagefläche eine Vertiefung für die Bildung einer Verbindung zwischen den Kanälen vorgesehen ist.

Miniaturisierte, zur Strömungssteuerung in der Mikrofluidtechnik einsetzbare Ventile solcher Art sind beispielsweise aus der DE 102 27 593 B4 und der US 6,748,975 B2 bekannt. Den Anlageflächen der Ventilkörper dieser bekannten Ventile kommt eine Doppelfunktion zu. Sie dichten einerseits bei geschlossenem Ventil den Einlasskanal gegen den Auslasskanal ab. Andererseits sorgen sie in jeder Ventilstellung für eine Abdichtung des Ventils gegen die Umgebung. Letztere Funktion ist von besonderer Bedeutung, da fluidtechnische Mikrobauelemente, insbesondere Flusszellen, vorrangig zur Untersuchung umweltbelastender, z.B. Krankheitserreger enthaltender Substanzen eingesetzt werden.

Die Herstellung der Anlageflächen in der für die Dichtfunktion erforderlichen Qualität ist sehr aufwendig. Zahlreiche Anforderungen, darunter die Eignung zur Reibpaarung, schränken zudem die Möglichkeiten der Materialauswahl ein. Elastische, an sich zur Abdichtung geeignete Kunststoffe, die jedoch Weichmacher enthalten, scheiden in der Regel aus. Ebenso verbietet sich in den meisten Fällen der Gebrauch von Schmiermitteln zur Unterstützung der Dichtfunktion. So besteht vor allem bei längerer, die Dichtfunktion der Anlageflächen beeinträchtigender Nutzung der Ventile die Gefahr von Umweltkontaminationen.

Ferner muss nach dem Stand der Technik ein beweglicher Ventilkörper zur Sicherstellung der Dichtfunktion gegenüber der Umgebung/Umwelt immer an der benetzten Dichtfläche anliegen und damit fest mit einem das Fluid verarbeitenden Bauteil verbunden sein. Dies ist insbesondere dann nachteilig, wenn es sich bei dem das Fluid verarbeitenden Bauteil um einen Einwegartikel oder ein Disposable handelt. Insbesondere bei mehreren Ventilen je Disposable ergibt sich ein erheblicher Mehraufwand für die Herstellung der beweglichen Ventilkörper selbst sowie für deren fluiddichte Anbringung z.B. an einer Flusszelle.

Die US 5,725,017 beschreibt ein Ventil der Mikrofluidtechnik mit zwei gegeneinander bewegbaren Ventilkörpern, die im geschlossenen Zustand des Ventils aneinander anliegen. Je nach Druck des durch das Ventil tretenden Fluids wird der eine Ventilkörper mehr oder weniger stark gegen eine flexible, in einen Hohlraum hinein ausdehnbare, an ihrem Ringumfang mit dem anderen Ventilkörper verbundene Folie gedrückt.

Der Erfindung liegt die Aufgabe zugrunde, ein neues Ventil der eingangs genannten Art zu schaffen, das bei verringertem Herstellungsaufwand mehr Sicherheit in Bezug auf Umweltkontaminationen bietet und/oder bei dem nicht beide Ventilkörper Bestandteil einer das Fluid verarbeitenden Einrichtung zu sein brauchen.

Das diese Aufgabe lösende Ventil nach der Erfindung ist dadurch gekennzeichnet, dass zwischen den Anlageflächen eine flexible, unter Bildung der Verbindung zwischen den Kanälen in die Vertiefung hinein dehnbare Trennfolie angeordnet ist.

Gemäß der Erfindung üben die einander zugewandten Anlageflächen der Ventilkörper keine unmittelbare Dichtfunktion mehr aus. Entsprechend verringert sich die Anforderung an die Oberflächenqualität der Anlageflächen. Durch die erfindungsgemöße Trennfolie braucht nur eine der Anlageflächen und damit nur einer der Ventilkörper mit dem Fluid in Berührung zu kommen. Die Kontaminationsgefahr lässt sich verringern.

Ein beweglicher Ventilkörper kann nach Benutzung ohne die Gefahr einer Kontamination der Umgebung z.B. von einer Flusszelle entfernt werden. Dies ist auch von Vorteil, wenn der Ventilkörper aus Verschleißgründen oder zum Aufbau einer alternativen Ventil- bzw. Schaltkonfiguration ausgetauscht werden muss.

Vorzugsweise ist die Trennfolie mit dem die Kanäle für den Zu- und Abfluss aufweisenden Ventilkörper verbunden, so dass sie sich gegen die Anlagefläche des Stators nicht verschieben lässt. Da mit Reibbeanspruchungen verbundene Relativbewegungen zwischen der Trennfolie und einer der Anlageflächen nur auf der dem Fluid abgewandten Seite der Trennfolie stattfinden, können Sie die Dichtigkeit des Ventils nicht beeinträchtigen.

In einer besonders bevorzugten Ausführungsform der Erfindung bildet einer der Ventilkörper einen unbeweglichen Stator und die Trennfolie ist mit dem Stator verbunden. Der andere Ventilkörper ist dann allein gegen den Stator beweglich und bildet vorzugsweise einen um eine Achse drehbaren Rotor oder ein translatorisch verschiebbares Teil.

Zweckmäßig weist in dieser Ausführungsform der Stator die Kanäle für den Zu- und Abfluss des Fluids und der Rotor die Vertiefung auf.
Während gekrümmte, z.B. zylindrische Anlageflächen möglich sind, handelt es sich in der bevorzugten Ausführungsform um ebene Flächen, die insbesondere senkrecht zur Drehachse des Rotors stehen.

Vorzugsweise ist die Trennfolie unter Einschluss der Ausmündungen der Kanäle mit einem der Ventilkörper verbunden. Eine die Trennfolie und einen der Ventilkörper umfassende Teilbaugruppe des Ventils kann dann bereits als solche vollkommen fluiddicht sein.

Letzteres Merkmal ist insbesondere für eine Ausführungsform von Bedeutung, in welcher der Stator und die Trennfolie integraler Bestandteil des Mikrobauelements, insbesondere einer Flusszelle, sind und der Rotor vorzugsweise Bestandteil eines Betriebsgeräts für das Mikrobauelement ist. Vorteilhaft lässt sich durch die Trennfolie sichern, dass auch nach Entsorgung des Mikrobauelements kein schädliches Fluid in die Umwelt gelangt.

Vorteilhaft weist einer der Ventilkörper einen vorstehenden, gegen den anderen Ventilkörper anlegbaren Führungssteg auf, der eine reproduzierbare Relativbewegung der Ventilkörper gegeneinander sichert. Im Falle eines Rotors kann es sich bei diesem Führungssteg um einen vorstehenden Ringsteg handeln, welcher einen die Anlagefläche des anderen Ventilkörpers begrenzenden Rand übergreift.

Der Querschnitt der Ausmündungen der Kanäle kann größer oder kleiner als der Querschnitt der Verbindung zwischen den Kanälen sein. In diesem Fall lässt sich auch bei großen Maßtoleranzen der Ventilbauteile die ordnungsgemäße Funktion des Ventils sichern.

Die Trennfolie lässt sich durch den Druck des Fluids oder/und durch Unterdruck auf der dem Fluid abgewandten Seite der Trennfolie in die Vertiefung hinein auslenken. Im letzteren Fall weist einer der Ventilkörper einen in der Vertiefung ausmündenden Saugkanal auf.

Der Querschnitt der Verbindung zwischen den Kanälen kann durch Änderung des Drucks des Fluids steuerbar sein, in dem die Vertiefung genügend Spielraum für unterschiedlich weite Auslenkungen der Trennfolie bietet.

In einer Ausführungsform der Erfindung ist die Vertiefung in Verschiebungsrichtung der Anlagenflächen länger als der Abstand zwischen den Ausmündungen der Kanäle und variiert, z.B. kontinuierlich oder stufenweise, im Querschnitt. Je nach Drehstellung lässt sich der mittlere Querschnitt des gebildeten Verbindungskanals und somit der Strömungswiderstand des Kanals verändern und dadurch bei gegebenem Fluiddruck die Durchflussmenge regulieren.

In einer weiteren Ausführungsform der Erfindung weist das Ventil mehrere Paare, je einen Zu- und einen Abfluss für einen Fluid bildender Kanäle auf. Jedem der Paare kann eine gesonderte Vertiefung zugeordnet sein oder die Paare sind wahlweise über eine einzige Vertiefung verbindbar. Insbesondere lässt sich ein einziger, z.B. zentral gelegener Kanal wahlweise mit einem von mehreren weiteren Kanälen verbinden.

Zur Unterstützung der Dichtfunktion lässt sich zwischen der Trennfolie und der die Vertiefung aufweisenden Anlagenfläche ein Schmiermittel einsetzen, wobei die Anlagefläche und die betreffende Anlagefläche Einbuchtungen, z.B. Riefen für die Aufnahme des Schmiermittels aufweisen kann.

Die Erfindung wird im Folgenden anhand von Ausführungsbeispielen und der beiliegenden, sich auf diese Ausführungsbeispiele beziehenden Zeichnungen weiter erläutert. Es zeigen:
- Fig. 1: ein erstes Ausführungsbeispiel für ein Ventil nach der Erfindung in der Offen- und Schließstellung, teilweise in Explosionsdarstellung,
- Fig. 2 und 3: Detaildarstellungen verschiedener Varianten des Ventils von Fig. 1,
- Fig. 4 bis 7: weitere Ausführungsbeispiele für Ventile nach der Erfindung, und
- Fig. 8 und 9: erfindungsgemäße, jeweils in eine Flusszelle integrierte Ventile nach der Erfindung.

Ein miniaturisiertes, zur Steuerung von Gas- und Flüssigkeitsströmen geeignetes Ventil weist einen ersten, einen Stator bildenden Ventilkörper 1 und einen zweiten, einen Rotor bildenden Ventilkörper 2 auf. Der Rotor ist über eine (nicht gezeigte) Motorantriebseinrichtung um eine Achse 3 drehbar.

Durch den ersten Ventilkörper bzw. Stator 1 führen zwei Paare von Kanälen 4 und 5, die jeweils einen Zufluss und einen Abfluss für ein Fluid bilden und in einer dem zweiten Ventilkörper bzw. Rotor 2 zugewandten Anlagefläche 6 ausmünden.

Der ebenen, kreisrunden Anlagefläche 6 des Stators liegt eine ebene, zur Anlagefläche 6 deckungsgleiche Anlagefläche 7 des Rotors gegenüber. Die Anlagefläche 7 ist durch einen den Rand der Anlagefläche 6 übergreifenden Ringsteg 8 begrenzt. In der Anlagefläche 7 sind zwei längliche, in einem Kreisbogen um die Drehachse 3 verlaufende Vertiefungen 9 gebildet.

Zwischen den Anlageflächen von Rotor und Stator befindet sich eine Trennfolie 10, die in dem gezeigten Ausführungsbeispiel deckungsgleich zu den Anlageflächen und in einem Randbereich 11 umlaufend unter Einschluss der Kanalausmündungen mit der Anlagefläche 6 des Stators 1 verschweißt ist. Die aus einem Metall, Kunststoff oder Verbundmaterial bestehende Trennfolie 10 kann je nach Größe des Ventils eine Dicke zwischen 0,001 und 1 mm aufweisen.

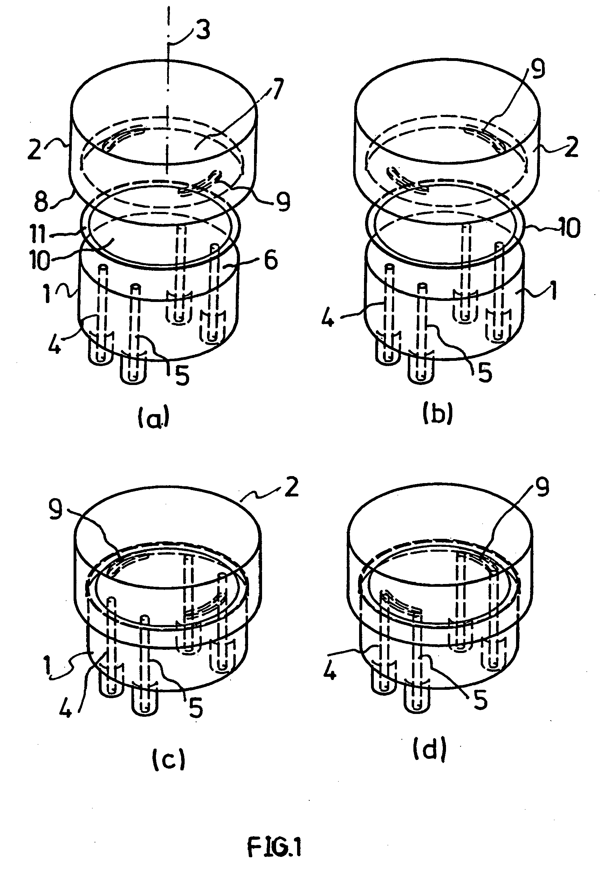

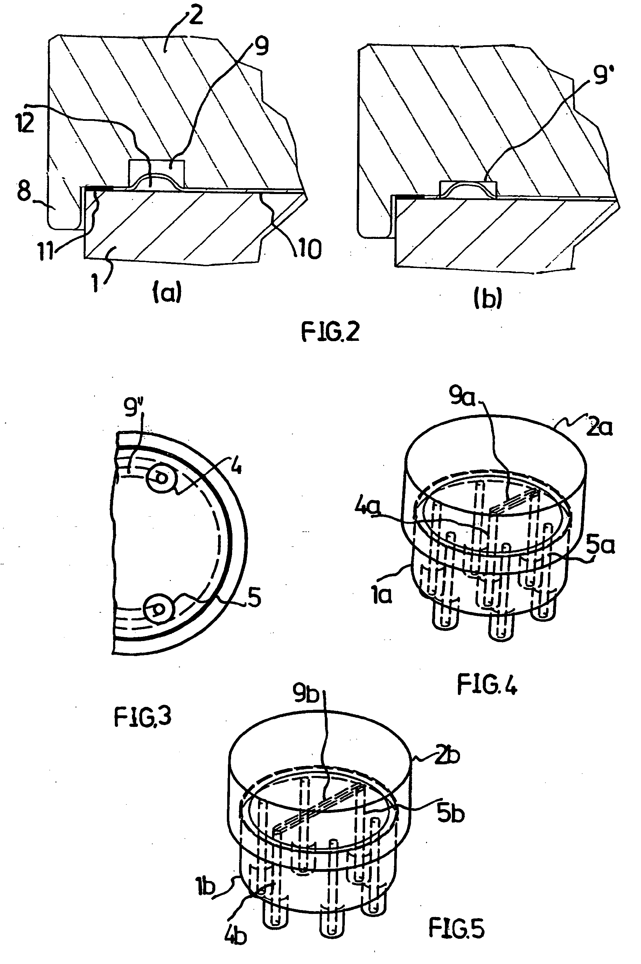

In der in den Figuren 1 a und 1 c gezeigten Drehstellung des Rotors 2 sind die Ausmündungen der Kanäle 4 und 5 durch die Trennfolie 10 und die darüber liegende Anlagefläche 7 des Rotors 2 verschlossen. In der Rotordrehstellung gemäß Fig. 1 b und 1d kann hingegen in jeweils einem der Kanäle 4 und 5 unter Druck stehendes Fluid die Trennfolie 10 in die Vertiefung 9 hinein ausdehnen und so eine Strömungsverbindung 12 zwischen den Kanälen 4,5 schaffen, wie dies in Fig. 2a dargestellt ist. Vorteilhaft bleibt dabei der Rotor 2 von dem Fluid getrennt. Indem sich das Fluid selbst seinen Weg schafft, werden Toträume innerhalb des Ventils vermieden.

Bei dem in Fig. 2a gezeigten Ausführungsbeispiel ist die Vertiefung 9 im Querschnitt so bemessen, dass ein weiter Spielraum für die Ausdehnung der Trennfolie 10 in die Vertiefung 9 hinein und damit für Variationen des Querschnitts der Strömungsverbindung 12 besteht. Durch geringe Änderungen des Fluiddrucks lässt sich daher die Durchflussmenge in einem weiten Einstellbereich variieren. Alternativ zeigt Fig. 2b eine nur flache, die Ausdehnung der Trennfolie schon bei geringem Fluiddruck begrenzende Vertiefung 9'. Weitere Drucksteigerungen können in diesem Fall nur zu einer proportionalen Erhöhung der Durchflussmenge führen.

Bei einer in Fig. 3 gezeigten Variante des Ausführungsbeispiels von Fig. 1 ist die Breite zweier länglicher Vertiefungen 9" deutlich kleiner als der Durchmesser der Kanäle 4 und 5. Dadurch ist selbst bei großen Maßschwankungen der Ventilbauteile gesichert, dass in einer Stellung des Rotors Strömungsverbindungen zwischen den Kanälen 4,5 herstellbar sind. Alternativ könnte die Breite der länglichen Vertiefungen deutlich größer als der Durchmesser der Kanäle sein.

Es wird nun auf die weiteren Figuren 4 bis 9 Bezug genommen, wo gleiche oder gleichwirkende Teile mit derselben Bezugszahl wie in den vorangehenden Figuren bezeichnet sind, wobei der betreffenden Bezugszahl der Buchstabe a,b usw. beigefügt ist.

Bei einem in Fig. 4 gezeigten Ausführungsbeispiel für ein Ventil mit einem Stator 1a und einem Rotor 2a ist ein einziger als Zu- oder Abfluss für ein Fluid dienender zentraler Kanal 4a über eine sich radial erstreckende längliche Vertiefung 9a wahlweise mit einem von sechs, als Zu- oder Abfluss dienenden Kanälen 5a verbindbar.

Figur 5 zeigt ein Ventil mit einem Stator 1 b und einem Rotor 2b, dessen Stator 1 b drei Paare diametral gegenüberliegender, jeweils einen Zu- und Abfluss für ein Fluid bildender Kanäle 4b und 5b aufweist. Entsprechend dieser Kanalanordnung erstreckt sich eine längliche Vertiefung 9b im Stator 2b nahezu über die gesamte Länge des Statordurchmessers.

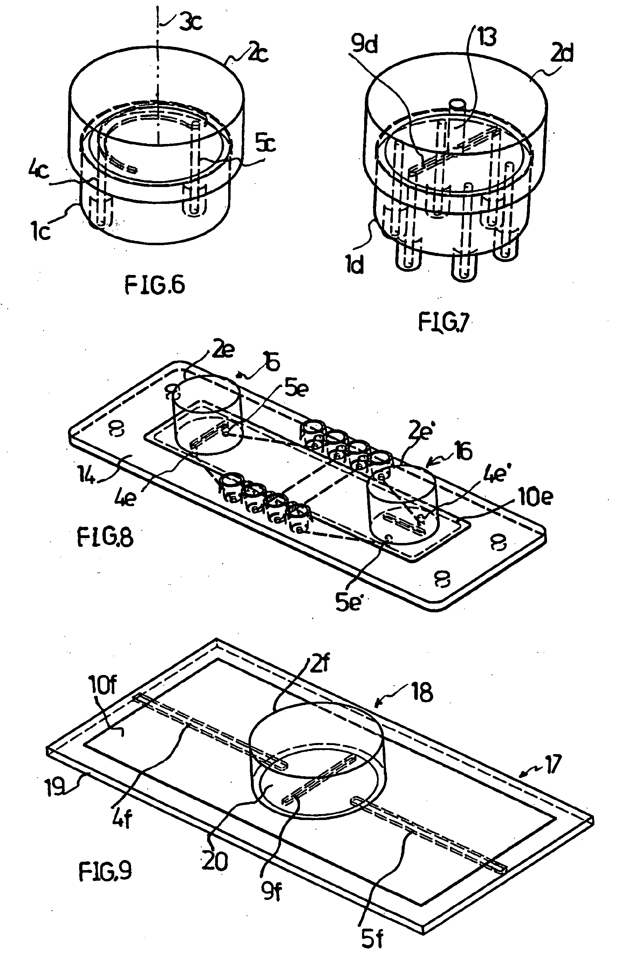

Bei einem in Fig. 6 gezeigten Ventil mit einem Stator 1 c und einem Rotor 2c weist der Stator 1 c nur zwei, einen Zu- und einen Abfluss bildende Kanäle 4c und 5c auf. Eine längliche Vertiefung 9c erstreckt sich entlang einem Kreisbogen um die Drehachse 3c des Rotors 2c. Die Bogenlänge der Vertiefung ist größer als die entsprechende Bogenlänge zwischen den Mündungsöffnungen der Kanäle 4c und 5c. Ferner nimmt die Breite oder/und Tiefe der Vertiefung mit der Bogenlänge zu. Je nach Drehstellung des Rotors 2c ändert sich der (mittlere) Querschnitt des jeweiligen Verbindungskanals zwischen den Kanälen 4c und 5c. Entsprechend hängt (bei gegebenem Fluiddruck) die Durchflussmenge allein von der Drehstellung des Rotors 2c ab. Der Rotor 2c kann so verdreht werden, dass die Durchflussmenge zwischen null und einer Maximalmenge variiert.

Ein in Fig. 7 gezeigtes Ventil mit einem Stator 1d und einem Rotor 2d unterscheidet sich von dem Ventil von Fig. 5 dadurch, dass eine längliche Vertiefung 9d mit einem den Rotor 2d durchsetzenden Unterdruckkanal 13 in Verbindung steht. Die Querschnittsgröße gebildeter Verbindungskanäle hängt damit nicht nur vom Druck des Fluids sondern auch vom Unterdruck im Kanal 13 ab. Entsprechend gering kann der Fluiddruck sein.

Während die vorangehend anhand der Figuren 4 bis 7 beschriebenen Ventile im Grundaufbau dem Ventil von Fig. 1 entsprechen, werden im Folgenden hiervon abweichende, in eine Flusszelle integrierte Ventile beschrieben.

Eine in Fig. 8 dargestellte Flusszelle 14 weist Ventile 15 und 16 mit einem Rotor und einem Stator auf. Der Stator mit einer daran angebrachten Trennfolie 10e ist jeweils integraler Bestandteil der Flusszelle 14 und jeweils von zwei, einen Zu- und einen Abfluss bildenden Kanälen 4e und 5e bzw. 4e' und 5e' durchsetzt. Der Rotor 2e bzw. 2e' kann Bestandteil eines Betriebsgerätes für die Flusszelle sein und wird beim Einsetzen der Flusszelle in das Betriebsgerät auf den jeweiligen, über dem Stator angeordneten Bereich der Trennfolie 10e aufgesetzt. Durch die Ventile 15 und 16 lassen sich Strömungen innerhalb der Flusszelle 14 steuern, deren Aufbau hier im Einzelnen nicht weiter zu beschreiben ist.

Aus Fig. 9 geht ein weiteres, in eine Flusszelle 17 integriertes Ventil 18 hervor. Eine auf einer Grundplatte 19 der Flusszelle 17 angeordnete Folie 10f ist, außer in einem Kreisflächenbereich 20, mit der Grundplatte 17 verbunden. Indem die Folie 10f Rillen in der Grundplatte 19 abdeckt, sind geschlossene Kanäle 4f und 5f gebildet, welche, in Draufsicht auf die Flusszelle gesehen, bis in den Kreisflächenbereich 20 hineinreichen. Dadurch sind einander diametral gegenüberliegende Ausmündungen gebildet. Ein Rotor 2f mit einer rillenartigen Vertiefung 9f kann als Bestandteil eines (nicht gezeigten) Betreibsgeräts auf die Flusszelle aufgesetzt und durch das Ventil 18 ein durch die Kanäle 4f und 5f fließender Fluidstrom gesteuert werden.

Vorteilhaft bleiben in der Flusszelle eingeschlossene Substanzen auch nach Entsorgung der Flusszelle in der Flusszelle eingeschlossen. Das Betriebsgerät kommt mit diesen Substanzen nicht in Berührung.

Als Materialien für die vorangehend beschriebenen Ventile und Mikrobauelemente kommen neben Metallen vor allem Kunststoffe, wie z.B. COC, PE, PP, PMMA, ggf. in Kombination mit Aluminium, in Betracht. Bei Verwendung von Kunststoffen wird zweckmäßig das kostengünstige Spritzgießverfahren angewandt. Die Trennfolie kann extrudiert, gewalzt und/oder laminiert sein. Auch für die Trennfolie lässt sich das Spritzgieß- oder ein anderes Gießverfahren einsetzen. Neben den genannten Kunststoffen kommen, insbesondere für die Trennfolie, Silikone, Polyurethane sowie thermoplastische Elastomere in Betracht. Zur Verbindung der Trennfolie mit einem der Ventilkörper, z.B. mit dem Stator, kommt Heißsiegeln, Kleben, Laserschweißen sowie thermisches oder chemisches Bonden in Frage. Insbesondere der Rotor kann mechanisch bearbeitet sein und aus sehr festen Kunststoffen, wie POM, Teflon oder anderen Fluorkunststoffen, Metallen oder Keramik bestehen. Zur Bildung der Anlageflächen lassen sich reibungsmindernde Schichten auftragen.

Hauptanwendungsgebiete der vorangehend beschriebenen Ventile bzw. Bauelemente sind die Bereitstellung, Verarbeitung und Analyse von Fluiden im Bereich der Medizin, insbesondere der medizinischen Diagnostik. Darüber hinaus kommen zahlreiche Einsatzmöglichkeiten in der Geräte- und Automatisierungstechnik, in den Bereichen Kosmetik, Umwelttechnik, Lebensmitteltechnik in Betracht. Aussichtsreich erscheint ferner der Einsatz in miniaturisierten Brennstoffzellen sowie in pneumatischen Steuerungssystemen.

## Patentansprüche

1. Ventil, insbesondere für ein Bauelement (14,17) der Mikrofluidtechnik, mit Flächen (6,7) zur gegenseitigen Anlage aufweisenden, unter Verschiebung der Anlageflächen (6,7) gegeneinander bewegbaren Ventilkörpern (1,2), wobei in einer (6) der Anlageflächen (6,7) Kanäle (4,5) für den Zu- und Abfluss eines Fluids ausmünden und in der anderen Anlagefläche (7) eine Vertiefung (9) für die Bildung einer Verbindung (12) zwischen den Kanälen (4,5) vorgesehen ist,
**dadurch gekennzeichnet,**
**dass** zwischen den Anlageflächen (6,7) eine flexible, unter Bildung der Verbindung (12) in die Vertiefung (9) hinein dehnbare Trennfolie (10) angeordnet ist.

2. Ventil nach Anspruch 1,
**dadurch gekennzeichnet,**
**dass** die Trennfolie (10) mit dem die Kanäle (4,5) für den Zu- und Abfluss aufweisenden Ventilkörper (1) verbunden ist.

3. Ventil nach Anspruch 1 oder 2,
**dadurch gekennzeichnet,**
**dass** einer der Ventilkörper (6,7) einen unbeweglichen Stator (6) bildet und die Trennfolie (10) mit dem Stator (6) verbunden ist.

4. Ventil nach Anspruch 3,
**dadurch gekennzeichnet,**
**dass** der Stator (6) die Kanäle (4,5) für den Zu- und Abfluss des Fluids aufweist.

5. Ventil nach Anspruch 3 oder 4,
**dadurch gekennzeichnet,**
**dass** der andere Ventilkörper einen um eine Achse (3) drehbaren Rotor (2) oder ein translatorisch verschiebbares Teil bildet.

6. Ventil nach Anspruch 5,
**dadurch gekennzeichnet,**
**dass** die Anlageflächen (6,7) ebene Flächen sind, die insbesondere senkrecht zur Drehachse (3) des Rotors (2) stehen.

7. Ventil nach einem der Ansprüche 1 bis 6,
**dadurch gekennzeichnet,**
**dass** die Trennfolie (10) unter Einschluss der Ausmündungen der Kanäle (4,5) mit einem der Ventilkörper (1) verbunden ist.

8. Ventil nach einem der Ansprüche 1 bis 7,
**dadurch gekennzeichnet,**
**dass** einer (2) der Ventilkörper (1,2) einen vorstehenden, gegen den anderen Ventilkörper (1) anlegbaren Führungssteg aufweist, der insbesondere als Ringsteg (8) ausgebildet ist.

9. Ventil nach einem der Ansprüche 1 bis 8,
**dadurch gekennzeichnet,**
**dass** der Querschnitt der Ausmündungen der Kanäle (4,5) größer oder kleiner als der Querschnitt der Verbindung (12) zwischen den Kanälen (4,5) ist.

10. Ventil nach einem der Ansprüche 1 bis 9,
**dadurch gekennzeichnet,**
**dass** die Trennfolie (10) durch den Druck des Fluids oder/und durch Unterdruck auf der dem Fluid abgewandten Seite der Trennfolie (10) in die Vertiefung (9) hinein dehnbar ist.

11. Ventil nach einem der Ansprüche 1 bis 10,
**dadurch gekennzeichnet,**
**dass** der Querschnitt der Verbindung (12) zwischen den Kanälen (4,5) durch Änderung des Drucks des Fluids steuerbar ist.

12. Ventil nach einem der Ansprüche 1 bis 11,
**dadurch gekennzeichnet,**
**dass** der durch Fluiddruck beeinflussbare Querschnitt der Verbindung (12) zwischen den Kanälen (4,5) durch die Querschnittsabmessungen der Vertiefung (9) begrenzt oder begrenzbar ist.

13. Ventil nach einem der Ansprüche 1 bis 12,
**dadurch gekennzeichnet,**
**dass** die Vertiefung (9) in Verschiebungsrichtung der Anlageflächen länger als der Abstand zwischen den Ausmündungen der Kanäle (4,5) ist und im Querschnitt variiert.

14. Ventil nach einem der Ansprüche 1 bis 13,
**dadurch gekennzeichnet,**
**dass** mehrere Paare, je einen Zu- und einen Abfluss für ein Fluid bildender Kanäle (4,5) vorgesehen sind.

15. Ventil nach Anspruch 14,
**dadurch gekennzeichnet,**
**dass** die Kanäle (4,5) der Paare über gesonderte Vertiefungen oder wahlweise über eine einzige Vertiefung verbindbar sind.

16. Ventil nach Anspruch 14 oder 15,
**dadurch gekennzeichnet,**
**dass** ein Kanal (4a) wahlweise mit einem von mehreren weiteren Kanälen (5a) verbindbar ist.

17. Ventil nach einem der Ansprüche 1 bis 16,
**dadurch gekennzeichnet,**
**dass** zwischen der Trennfolie (10) und der die Vertiefung (9) aufweisenden Anlagefläche (7) ein Schmiermittel vorgesehen und vorzugsweise in der Trennfolie oder/und der Anlagefläche Einbuchtungen für die Aufnahme des Schmiermittels vorgesehen sind.

18. Ventil nach einem der Ansprüche 1 bis 17,
**dadurch gekennzeichnet,**
**dass** der Stator und die Trennfolie integraler Bestandteil des Bauelements, insbesondere einer Flusszelle (14,17), sind und der Rotor vorzugsweise Bestandteil eines Betriebsgeräts für das Mikrobauelement ist.

## Claims

1. Valve, in particular for a component (14, 17) in microfluid technology, comprising valve bodies (1, 2) which have surfaces (6, 7) intended for contact with one another and which are movable in relation to one another by displacing the contact surfaces (6, 7), wherein channels (4, 5) for the inflow and outflow of a fluid open into one (6) of the contact surfaces (6, 7) and a depression (9) for forming a connection (12) between the channels (4, 5) is provided in the other contact surface (7),
**characterized**
**in that** a flexible separating film (10), which can be stretched into the depression (9) to form the connection (12), is arranged between the contact surfaces (6, 7).

2. Valve according to Claim 1,
**characterized**
**in that** the separating film (10) is connected to the valve body (1) having the channels (4, 5) for the inflow and outflow.

3. Valve according to Claim 1 or 2,
**characterized**
**in that** one of the valve bodies (6, 7) forms an immovable stator (6) and the separating film (10) is connected to the stator (6).

4. Valve according to Claim 3,
**characterized**
**in that** the stator (6) has the channels (4, 5) for the inflow and outflow of the fluid.

5. Valve according to Claim 3 or 4,
**characterized**
**in that** the other valve body forms a rotor (2) that is rotatable about an axis (3) or a part that can be displaced in a translatory manner.

6. Valve according to Claim 5,
**characterized**
**in that** the contact surfaces (6, 7) are planar surfaces that are in particular perpendicular to the axis of rotation (3) of the rotor (2).

7. Valve according to one of Claims 1 to 6,
**characterized**
**in that** the separating film (10) is connected to one of the valve bodies (1) while including the openings of the channels (4, 5).

8. Valve according to one of Claims 1 to 7, **characterized**
**in that** one (2) of the valve bodies (1, 2) has a protruding guide web, which can be placed against the other valve body (1) and is formed in particular as an annular web (8).

9. Valve according to one of Claims 1 to 8, **characterized**
**in that** the cross section of the openings of the channels (4, 5) is greater or smaller than the cross section of the connection (12) between the channels (4, 5).

10. Valve according to one of Claims 1 to 9,
**characterized**
**in that** the separating film (10) can be stretched into the depression (9) by the pressure of the fluid and/or by negative pressure on the side of the separating film (10) facing away from the fluid.

11. Valve according to one of Claims 1 to 10,
**characterized**
**in that** the cross section of the connection (12) between the channels (4, 5) is controllable by changing the pressure of the fluid.

12. Valve according to one of Claims 1 to 11,
**characterized**
**in that** the cross section of the connection (12) between the channels (4, 5) that can be influenced by fluid pressure is limited or can be limited by the cross-sectional dimensions of the depression (9).

13. Valve according to one of Claims 1 to 12,
**characterized**
**in that** the depression (9) is longer in the direction of displacement of the contact surfaces than the distance between the openings of the channels (4, 5) and varies in cross section.

14. Valve according to one of Claims 1 to 13,
**characterized**
**in that** a number of pairs of channels (4, 5) are provided, each forming an inflow and an outflow for a fluid.

15. Valve according to Claim 14,
**characterized**
**in that** the channels (4, 5) of the pairs are connectable by way of separate depressions or optionally by way of a single depression.

16. Valve according to Claim 14 and 15,
**characterized**
**in that** a channel (4a) is optionally connectable to one of a number of further channels (5a).

17. Valve according to one of Claims 1 to 16,
**characterized**
**in that** a lubricant is provided between the separating film (10) and the contact surface (7) having the depression (9), and indentations for receiving the lubricant are preferably provided in the separating film and/or the contact surface.

18. Valve according to one of Claims 1 to 17,
**characterized**
**in that** the stator and the separating film are integral parts of the component, in particular a flow cell (14, 17), and the rotor is preferably part of an operating device for the microcomponent.

## Revendications

1. Soupape, en particulier pour un composant (14, 17) en technique des micro fluides, comprenant des corps de soupape (1, 2), présentant des surfaces (6, 7) destinées à venir mutuellement en contact et déplaçables l'un par rapport à l'autre en déplaçant les surfaces de contact (6, 7), dans laquelle il est prévu d'une part des canaux (4, 5) pour l'amenée et l'évacuation d'un fluide, qui débouchent dans l'une (6) des surfaces de contact (6, 7), et d'autre part un renfoncement (9) dans l'autre surface de contact (7) pour la formation d'une liaison (12) entre les canaux (4, 5),
**caractérisée en ce qu'**un film de séparation flexible (10), susceptible de s'allonger en pénétration dans le renfoncement (9) en formant la liaison (12), est agencé entre les surfaces de contact (6, 7).

2. Soupape selon la revendication 1,
**caractérisée en ce que** le film de séparation (10) est relié avec le corps de soupape (1) qui comporte les canaux (4, 5) pour l'amenée et l'évacuation.

3. Soupape selon la revendication 1 ou 2,
**caractérisée en ce que** l'un des corps de soupape (6, 7) forme un stator immobile (6), et le film de séparation (10) est relié avec le stator (6).

4. Soupape selon la revendication 3,
**caractérisée en ce que** le stator (6) comporte les canaux (4, 5) pour l'amenée et l'évacuation du fluide.

5. Soupape selon la revendication 3 ou 4,
**caractérisée en ce que** l'autre corps de soupape forme un rotor (2) en rotation autour d'un axe (3) ou une pièce déplaçable en translation.

6. Soupape selon la revendication 5,
**caractérisée en ce que** les surfaces de contact (6, 7) sont des surfaces planes, qui sont en particulier perpendiculaires à l'axe de rotation (3) du rotor (2).

7. Soupape selon l'une des revendications 1 à 6,
**caractérisée en ce que** le film de séparation (10) est relié à l'un des corps de soupape (1) en incluant les embouchures des canaux (4, 5).

8. Soupape selon l'une des revendications 1 à 7,
**caractérisée en ce que** l'un (2) des corps de soupape (1, 2) comporte une barrette de guidage en saillie, susceptible d'être appliquée contre l'autre corps de soupape (1), et qui est réalisée en particulier sous forme de barrette annulaire (8).

9. Soupape selon l'une des revendications 1 à 8,
**caractérisée en ce que** la section transversale des embouchures des canaux (4, 5) est plus grande ou plus petite que la section transversale de la liaison (12) entre les canaux (4, 5).

10. Soupape selon l'une des revendications 1 à 9,
**caractérisée en ce que** le film de séparation (10) est susceptible d'être allongé en pénétration dans le renfoncement (9) sous la pression du fluide et/ou sous une dépression sur le côté du film de séparation (10) détourné du fluide.

11. Soupape selon l'une des revendications 1 à 10,
**caractérisée en ce que** la section transversale de la liaison (12) entre les canaux (4, 5) est susceptible d'être commandée par modification de la pression du fluide.

12. Soupape selon l'une des revendications 1 à 11,
**caractérisée en ce que** la section transversale de la liaison (12) entre les canaux (4, 5), susceptible d'être influencée par la pression du fluide, est limitée ou susceptible d'être limitée par les dimensions de section transversale du renfoncement (9).

13. Soupape selon l'une des revendications 1 à 12,
**caractérisée en ce que** le renfoncement (9) est plus long, dans la direction de déplacement des surfaces de contact, que la distance entre les embouchures des canaux (4, 5), et **en ce que** sa section transversale varie.

14. Soupape selon l'une des revendications 1 à 13,
**caractérisée en ce qu'**il est prévu plusieurs paires de canaux (4, 5), formant respectivement une amenée et une évacuation pour un fluide.

15. Soupape selon la revendication 14,
**caractérisée en ce que** les canaux (4, 5) des paires sont susceptibles d'être reliés, soit par des renfoncements particuliers, soit au choix par un unique renfoncement.

16. Soupape selon la revendication 14 ou 15,
**caractérisée en ce qu'**un canal est susceptible d'être relié au choix avec un canal ou avec plusieurs autres canaux (5a).

17. Soupape selon l'une des revendications 1 à 16,
**caractérisée en ce qu'**un lubrifiant est prévu entre le film de séparation (10) et la surface de contact (7) présentant le renfoncement (9), et **en ce qu'**il est de préférence prévu des creux pour la réception du lubrifiant dans le film de séparation et/ou dans la surface de contact.

18. Soupape selon l'une des revendications 1 à 17,
**caractérisée en ce que** le stator et le film de séparation font partie intégrante du composant, en particulier d'une cellule à écoulement (14, 17), et **en ce que** le rotor fait de préférence partie intégrante d'un appareil de service pour l'élément à microfluides.
